# EUROPEAN PATENT APPLICATION

(11) **EP 4 708 412 A1**
(43) Date of publication of application: **11.03.2026**
(21) Application number: 25198879.6
(22) Date of filing: 28.08.2025
(51) Int. Cl.: H01M 8/04537, H01M 8/04858, H01M 16/00

(54) **CONTROL METHOD FOR FUEL CELL SYSTEM, CONTROL PROGRAM FOR FUEL CELL SYSTEM, FUEL CELL SYSTEM, AND MONOGENERATION DEVICE**

(30) Priority: 30.08.2024 JP 2024148547
(71) Applicant: Yanmar Holdings Co., Ltd., Osaka-shi, Osaka (JP)
(72) Inventor: HARADA, Junichi, Osaka (JP); WATANABE, Kaoru, Osaka (JP); KOGA, Shojiro, Osaka (JP)
(74) Representative: Sekiguchi, Kazuya

(57) **Abstract**

[Problem] Provided is a technique capable of expanding an output range of a fuel cell system while suppressing deterioration of a fuel cell.

[Solution] A fuel cell system includes a fuel cell, and a battery that stores power output from the fuel cell, and has a first operation mode in which power output from the fuel cell is extracted to the outside, and a second operation mode including a discharge mode in which power output from the battery is extracted to the outside. A control method for a fuel cell system includes switching between the first operation mode and the second operation mode based on target power of the fuel cell.

## Description

### TECHNICAL FIELD

The present invention relates to a control method for a fuel cell system, a control program for a fuel cell system, a fuel cell system, and a monogeneration device.

### BACKGROUND ART

A cogeneration device including a gas engine is known as a conventional technique (see, for example, Patent Document 1).

### PRIOR ART DOCUMENT

### PATENT DOCUMENT

Patent Document 1: JP-B2-6321484

### SUMMARY OF INVENTION

### TECHNICAL PROBLEM

In recent years, from the viewpoint of carbon neutral, a power generation device (for example, a monogeneration device) using a fuel cell system including a fuel cell is desired. By the way, in view of the characteristics of the fuel cell, in a case where the generated power is small, deterioration of the fuel cell easily progresses as compared with a case where the generated power is large. Therefore, from the viewpoint of suppressing deterioration of the fuel cell, for example, it is desirable not to cause the fuel cell to generate power with less than predetermined power. However, in this case, an output range of the fuel cell system (power generation device) is limited to the predetermined power described above or more.

The present invention has been made to solve the problem described above, and an object of the present invention is to provide a technique capable of expanding an output range of a fuel cell system while suppressing deterioration of a fuel cell.

### SOLUTION TO PROBLEM

A control method for a fuel cell system according to one aspect of the present invention is a control method for a fuel cell system including a fuel cell, and a battery that stores power output from the fuel cell, and having a first operation mode in which power output from the fuel cell is extracted to an outside, and a second operation mode including a discharge mode in which power output from the battery is extracted to an outside, and the control method includes switching between the first operation mode and the second operation mode based on target power of the fuel cell.

A control program for a fuel cell system according to another aspect of the present invention causes at least one arithmetic device to execute the control method described above.

A fuel cell system according to another aspect of the present invention is a fuel cell system including: a fuel cell; and a battery that stores power output from the fuel cell, and having a first operation mode in which power output from the fuel cell is extracted to an outside, and a second operation mode including a discharge mode in which power output from the battery is extracted to an outside, in which the fuel cell system further includes a mode switching unit that switches between the first operation mode and the second operation mode based on target power of the fuel cell.

A monogeneration device according to another aspect of the present invention includes the fuel cell system described above.

### ADVANTAGEOUS EFFECTS OF INVENTION

According to the configuration described above, it is possible to expand the output range of the fuel cell system while suppressing the deterioration of the fuel cell.

### BRIEF DESCRIPTION OF DRAWINGS

Fig. 1 is a block diagram schematically illustrating a schematic connection configuration of a monogeneration device according to an embodiment of the present invention;
Fig. 2 is a block diagram schematically illustrating a configuration of a fuel cell system of the monogeneration device;
Fig. 3A is a flowchart indicating a part of a flow in switching of an operation mode of the fuel cell system;
Fig. 3B is a flowchart indicating another part of the flow in the switching of the operation mode;
Fig. 4 is an explanatory diagram for describing the switching of the operation mode based on target power of a fuel cell included in the fuel cell system; and
Fig. 5 is a flowchart indicating a flow of changing a power generation instruction to the fuel cell.

### DESCRIPTION OF EMBODIMENTS

An embodiment of the present invention will be described below with reference to the drawings.

### [1. Connection configuration of monogeneration device]

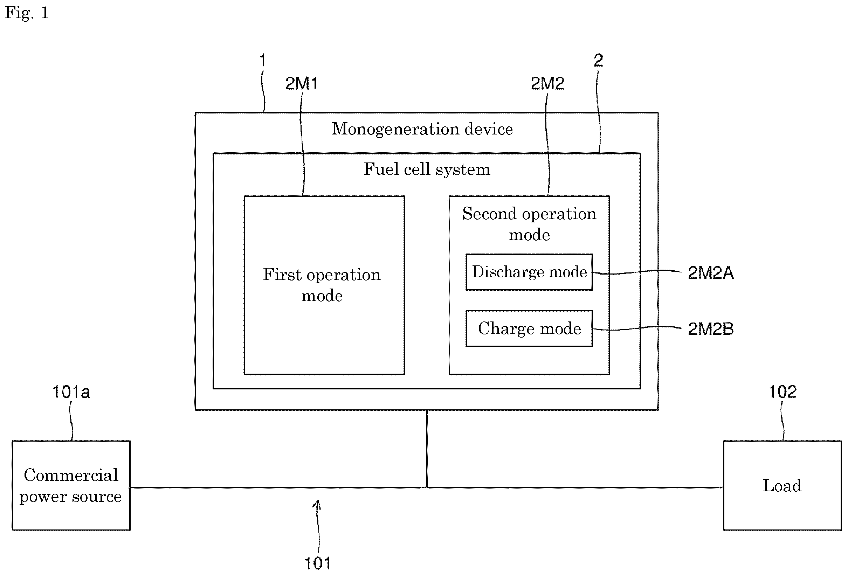

Fig. 1 is a block diagram schematically illustrating a schematic connection configuration of a monogeneration device 1 according to an embodiment of the present invention. The monogeneration device 1 includes a fuel cell system 2 and is grid-connected to a commercial power grid 101. Note that, although only one monogeneration device 1 is illustrated in Fig. 1 as an example, a plurality of monogeneration devices 1 may be grid-connected to the commercial power grid 101.

The fuel cell system 2 generates power using fuel gas supplied from the outside of the monogeneration device 1 and oxidant gas. In the present embodiment, an example in which hydrogen gas is used as fuel gas and air is used as oxidant gas will be described. However, fuel gas is not limited to hydrogen gas, and may be, for example, gas containing methane as a main component. In addition, oxidant gas is not limited to air, and may be any gas containing oxygen. Therefore, the monogeneration device 1 generates power. More specifically, the monogeneration device 1 simply has a power generation function. That is, for example, a waste heat recovery function for recovering waste heat generated by power generation is excluded from the monogeneration device 1.

In addition, the fuel cell system 2 has a first operation mode 2M1 and a second operation mode 2M2 as operation modes 2M. The second operation mode 2M2 includes a discharge mode 2M2A and a charge mode 2M2B. Details of these modes will be described later.

The commercial power grid 101 includes a commercial power source 101a, and supplies commercial power generated by the commercial power source 101a. A load 102 is connected to the commercial power grid 101. That is, the load 102 is electrically connected to the fuel cell system 2. The load 102 includes, for example, household electric equipment, industrial (institutional) electric equipment, and the like. Specifically, a motor, a pump, and the like provided in such pieces of equipment consume power. The demand power (power consumption) of the load 102 is covered by the power generated by the monogeneration device 1 (fuel cell system 2) and the commercial power supplied from the commercial power grid 101. Note that the configuration related to the power supply to the load 102 is not limited to the configuration described above. For example, the load 102 may be directly connected to the monogeneration device 1 without being connected to the commercial power grid 101. In this case, the demand power of the load 102 is covered by the power generated by the monogeneration device 1. Hereinafter, the configuration of the fuel cell system 2 will be described.

### [2. Configuration of fuel cell system]

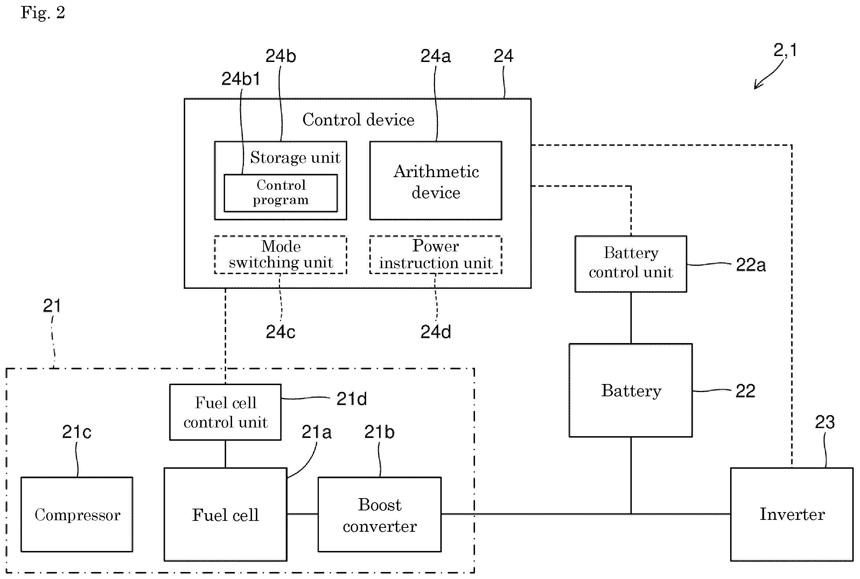

Fig. 2 is a block diagram schematically illustrating the configuration of the fuel cell system 2. The fuel cell system 2 includes a fuel cell module 21, a battery 22, an inverter 23, and a control device 24.

In the present embodiment, one fuel cell module 21, one inverter 23, and one control device 24 are provided, and a plurality of batteries 22 is provided. However, Fig. 2 illustrates only one battery 22 as an example. Note that the number of fuel cell modules 21, the number of batteries 22, the number of inverters 23, and the number of control devices 24 are not limited to those described above. For example, the number of fuel cell modules 21, the number of inverters 23, and the number of control devices 24 may be plural, or the number of batteries 22 may be one. In addition, the fuel cell module 21, the battery 22, the inverter 23, and the control device 24 are disposed inside the monogeneration device 1.

The fuel cell module 21 includes a fuel cell 21a, a boost converter 21b, a compressor 21c, and a fuel cell control unit 21d. That is, the fuel cell system 2 includes the fuel cell 21a, the boost converter 21b, the compressor 21c, and the fuel cell control unit 21d.

The fuel cell 21a (also referred to as a fuel cell stack) includes a plurality of stacked cells. Each of the cells includes a solid polymer electrolyte membrane, an anode electrode, a cathode electrode, and a pair of separators. The anode electrode and the cathode electrode sandwich the solid polymer electrolyte membrane. The anode electrode is a negative electrode (fuel electrode), and includes an anode catalyst layer and a gas diffusion layer. The cathode electrode is a positive electrode (air electrode), and includes a cathode catalyst layer and a diffusion layer. The anode electrode, the solid polymer electrolyte membrane, and the cathode electrode constitute a membrane electrode assembly (MEA). The pair of separators sandwiches the membrane electrode assembly. Each of the separators includes a plurality of grooves. Each of the grooves in one separator forms a flow path of hydrogen gas. Each of the grooves in the other separator forms a flow path of air.

On the anode electrode side, hydrogen is decomposed into hydrogen ions and electrons by a catalyst. The hydrogen ions pass through the solid polymer electrolyte membrane and move to the cathode electrode. On the other hand, the electrons move to the cathode electrode through an external circuit. As a result, current is generated (power is generated). On the cathode electrode side, oxygen contained in air is combined with the electrons that have flowed through the external circuit and with the hydrogen ions that have passed through the solid polymer electrolyte membrane, to generate water. The generated water is contained in the exhaust gas and discharged to the outside of the monogeneration device 1.

The power generated by the fuel cell 21a is boosted by the boost converter 21b and supplied to the inverter 23. Note that the power generated by the fuel cell 21a and boosted by the boost converter 21b may be supplied to the battery 22 in addition to the inverter 23.

The compressor 21c is provided to take in air supplied to the fuel cell 21a from the outside of the monogeneration device 1. The air taken in from the outside of the monogeneration device 1 by the compressor 21c flows into the fuel cell 21a via a plurality of filters (none of which are illustrated) provided inside the monogeneration device 1.

The fuel cell control unit 21d controls each unit of the fuel cell module 21. The fuel cell control unit 21d controls, for example, power generation by the fuel cell 21a, driving of the compressor 21c, and the like. The fuel cell control unit 21d is communicably connected to the control device 24. The communication between the fuel cell control unit 21d and the control device 24 is performed by, for example, CAN communication, but the communication method is not limited to CAN communication.

The battery 22 includes, for example, a lithium ion battery, and stores power supplied to the inverter 23. The battery 22 may be configured by unitizing a plurality of battery cells, or may be configured with a single battery cell. As described above, power generated by the fuel cell 21a may be supplied to the battery 22. The battery 22 is charged by the power supplied from the fuel cell 21a to the battery 22. That is, the battery 22 stores power output from the fuel cell 21a.

The battery 22 is controlled by a battery control unit 22a. The battery control unit 22a is also referred to as a battery management unit (BMU), and controls input and output of the battery 22, for example. In addition, the battery control unit 22a calculates a state of charge (SOC) S of the battery 22 based on information (for example, the voltage, current, temperature, and the like of the battery 22) acquired via various sensors (not illustrated) provided in the battery 22. The state of charge S of the battery 22 means a ratio of the remaining charge capacity (at that time) to the charge capacity at the time of full charge.

The battery control unit 22a is communicably connected to the control device 24. The communication between the battery control unit 22a and the control device 24 is performed by, for example, CAN communication, but the communication method is not limited to CAN communication. The battery control unit 22a transmits, for example, information on the battery 22 (including the state of charge S calculated by the battery control unit 22a) to the control device 24 via CAN communication.

The inverter 23 is configured by attaching various electric components (for example, a diode, a capacitor, a power transistor, or the like) to a substrate (none of which are illustrated). The inverter 23 converts DC voltage power supplied from at least one of the fuel cell 21a and the battery 22 into AC voltage power, and supplies the AC voltage power to the load 102 (see Fig. 1). More specifically, the inverter 23 supplies the AC power to the load 102 according to the demand power of the load 102. For example, the inverter 23 increases the AC power to be supplied to the load 102 when the demand power of the load 102 increases, and reduces the AC power to be supplied to the load 102 when the demand power of the load 102 decreases.

Note that, hereinafter, the voltage supplied to the inverter 23 may be referred to as a link voltage. The voltage (of power) generated by the fuel cell 21a and boosted by the boost converter 21b corresponds to the link voltage. Therefore, the link voltage is the same as the voltage (of power) output from the battery 22.

The inverter 23 is communicably connected to the control device 24. The communication between the inverter 23 and the control device 24 is performed by, for example, CAN communication, but the communication method is not limited to CAN communication. The inverter 23 transmits, for example, information on power output from the inverter 23 (at that time) to the control device 24 via CAN communication.

The control device 24 controls each unit of the fuel cell system 2. Note that the control device 24 may control equipment included in the monogeneration device 1 other than the fuel cell system 2, in addition to the fuel cell system 2.

The control device 24 is, for example, a computer device including an arithmetic device 24a, a storage unit 24b, and an input/output unit (not illustrated). The arithmetic device 24a is, for example, a processor or a microprocessor. In Fig. 2, as an example, one arithmetic device 24a is illustrated in the control device 24, but the number of arithmetic devices 24a may be two or may be three or more.

The storage unit 24b is a main storage device such as a read only memory (ROM) and a random access memory (RAM). The storage unit 24b may further include an auxiliary storage device such as a hard disk drive (HDD) or a solid state drive (SSD). The storage unit 24b stores various programs, data, and the like. The various programs include a control program 24b1 related to a method of switching the operation mode 2M (see Fig. 1) of the fuel cell system 2 and to a power generation instruction to the fuel cell 21a. For example, the arithmetic device 24a reads the control program 24b1 from the storage unit 24b and executes arithmetic processing according to the control program 24b1. The program stored in the storage unit 24b may be provided by, for example, a computer-readable non-volatile recording medium. As another example, the program may be provided from a program providing server via a communication line such as the Internet.

The control device 24 can be operated as a mode switching unit 24c and a power instruction unit 24d in cooperation with the hardware and software described above. That is, the fuel cell system 2 includes the mode switching unit 24c and the power instruction unit 24d. The control device 24 may be configured by one piece of hardware or may be configured by a plurality of pieces of hardware capable of communicating with each other.

Note that the mode switching unit 24c and the power instruction unit 24d included in the control device 24 may be realized by causing the arithmetic device 24a to execute the arithmetic processing according to the program, that is, by software as described above, but may be realized by another method. At least one of the mode switching unit 24c and the power instruction unit 24d may be realized by using, for example, an application specific integrated circuit (ASIC), a field programmable gate array (FPGA), or the like. That is, at least one of the mode switching unit 24c and the power instruction unit 24d may be realized by hardware using a dedicated IC or the like. In addition, at least one of the mode switching unit 24c and the power instruction unit 24d may be realized by using software and hardware in combination. Note that the mode switching unit 24c and the power instruction unit 24d have a conceptual configuration. Therefore, functions executed by one component may be distributed to a plurality of components, or functions of a plurality of components may be integrated into one component.

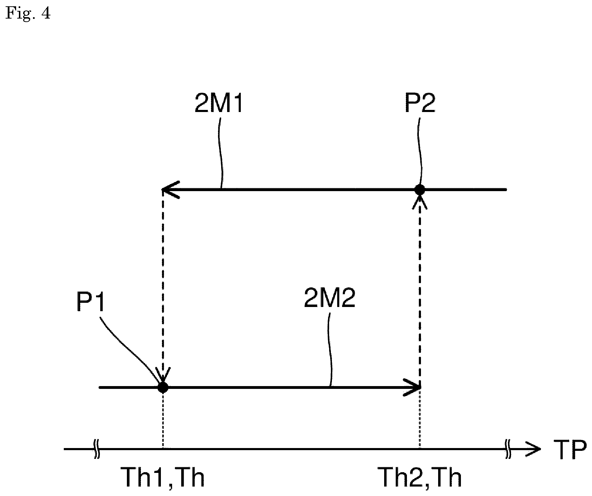

The mode switching unit 24c controls switching of the operation mode 2M of the fuel cell system 2 based on target power TP (see Fig. 4) of the fuel cell 21a described later. As described above, the operation mode 2M includes the first operation mode 2M1 and the second operation mode 2M2 (see Fig. 1).

In the first operation mode 2M1, (all) power generated by the fuel cell 21a is supplied to the load 102 via the boost converter 21b and the inverter 23. That is, the fuel cell system 2 in the first operation mode 2M1 extracts power output from the fuel cell 21a to the outside of the fuel cell system 2 (monogeneration device 1).

As described above, the second operation mode 2M2 includes the discharge mode 2M2A and the charge mode 2M2B (see Fig. 1). In the discharge mode 2M2A, power generation by the fuel cell 21a is stopped, and power discharged from the battery 22 is supplied to the load 102. That is, the fuel cell system 2 in the discharge mode 2M2A extracts power output from the battery 22 to the outside of the fuel cell system 2 (monogeneration device 1) while stopping the power generation by the fuel cell 21a.

In the charge mode 2M2B, a part of the power generated by the fuel cell 21a is supplied to the load 102, and the rest of the power generated by the fuel cell 21a is supplied to the battery 22. That is, the fuel cell system 2 in the charge mode 2M2B extracts power output from the fuel cell 21a to the outside of the fuel cell system 2 (monogeneration device 1) while storing the power in the battery 22.

In addition to switching between the first operation mode 2M1 and the second operation mode 2M2, the mode switching unit 24c controls switching between the discharge mode 2M2A and the charge mode 2M2B in the second operation mode 2M2 based on the state of the battery 22. The power instruction unit 24d instructs the fuel cell control unit 21d on power generated by the fuel cell 21a.

### [3. Method of switching operation mode of fuel cell system]

The method of switching the operation mode 2M will be described. Note that, when the operation mode 2M is switched, the instruction of power generation to the fuel cell 21a is changed. Therefore, a power generation instruction to the fuel cell 21a will also be described below.

In the present embodiment, the method of switching the operation mode 2M is realized by the arithmetic device 24a executing the arithmetic processing according to the control program 24b1 in the control device 24 (see Fig. 2). In the present embodiment, as described above, the number of arithmetic devices 24a is one, but may be two or more. In this case, the arithmetic processing according to the control program 24b1 may be realized by two or more arithmetic devices 24a. That is, the control program 24b1 is a program that causes at least one arithmetic device 24a to execute a control method related to switching of the operation mode 2M of the fuel cell system 2.

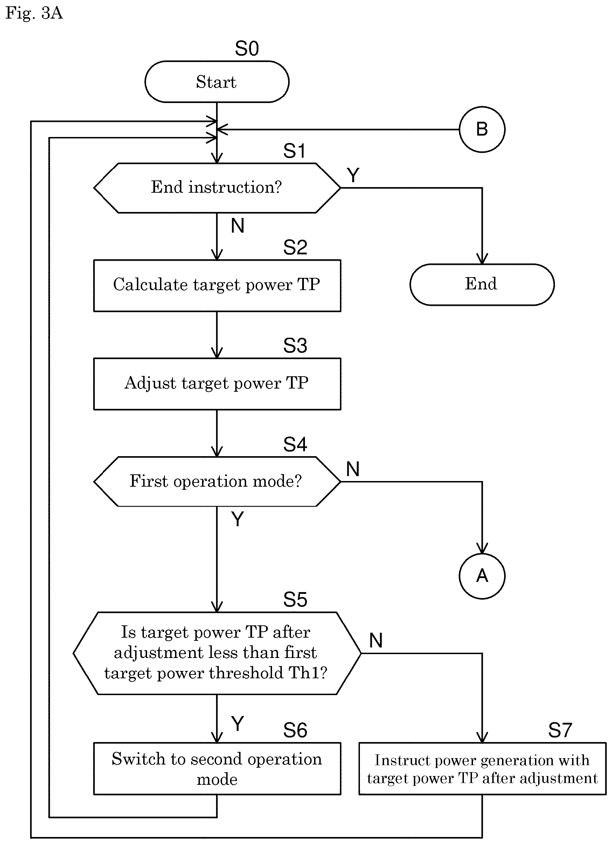

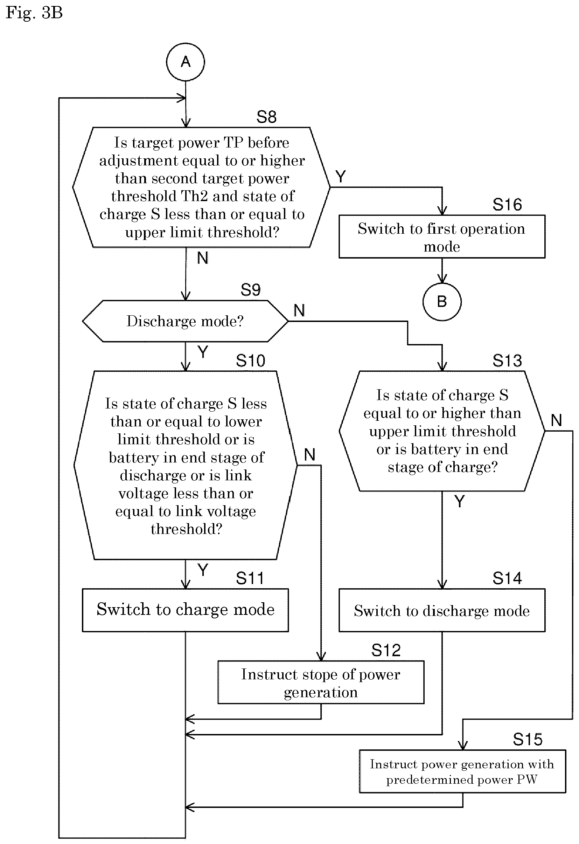

Figs. 3A and 3B are flowcharts indicating a flow in switching of the operation mode 2M of the fuel cell system 2. The flowchart indicated in Fig. 9A and the flowchart indicated in Fig. 9B are connected by a connector A and a connector B. In step S0, it is assumed that the fuel cell system 2 (monogeneration device 1) is operated in the first operation mode 2M1. Note that, in step S0, the fuel cell system 2 may be operated in the second operation mode 2M2.

As indicated in Fig. 3A, in step S1, the mode switching unit 24c (see Fig. 2) determines whether an end instruction of the operation of the fuel cell system 2 is issued. In the present embodiment, the end instruction is realized by operating an operation panel (not illustrated) provided in the monogeneration device 1. Note that, in the present embodiment, the end instruction of the operation of the fuel cell system 2 and the end instruction of the operation of the monogeneration device 1 are the same, but may be different. In a case where the end instruction is issued (Yes in step S1), the operation of the fuel cell system 2 ends, and this flowchart ends. In a case where the end instruction is not issued (No in step S1), the processing proceeds to the following step S2.

In step S2, the mode switching unit 24c calculates the target power TP of the fuel cell 21a. In the present embodiment, the target power TP is calculated by dividing the actual power output from the inverter 23 by the conversion efficiency of the inverter 23. When the target power TP of the fuel cell 21a is calculated, the processing proceeds to the following step S3.

In step S3, the mode switching unit 24c adjusts the target power TP of the fuel cell 21a. In the present embodiment, the above adjustment is calculated by adjusting the target power TP calculated in step S2 with an adjustment value corresponding to the state of charge S of the battery 22. More specifically, in a case where the state of charge S of the battery 22 is the same as the target state of charge of the battery 22, the mode switching unit 24c maintains the target power TP before adjustment (keeps it as it is). In a case where the state of charge S of the battery 22 is less than the target state of charge of the battery 22, the mode switching unit 24c adds a predetermined first adjustment value to the target power TP before adjustment. In a case where the state of charge S of the battery 22 is larger than the target state of charge of the battery 22, the mode switching unit 24c subtracts a predetermined second adjustment value from the target power TP before adjustment. Note that, in the present embodiment, the target state of charge of the battery 22, the first adjustment value, and the second adjustment value are set in advance and stored in the storage unit 24b (see Fig. 2).

Therefore, the target power TP of the fuel cell 21a is calculated based on the output power (actual power) of the inverter 23. In addition, as described above, the inverter 23 supplies the AC power, that is, outputs the AC power according to the demand power of the load 102. In other words, the target power TP of the fuel cell 21a is calculated based on the demand power of the load 102. When the target power TP of the fuel cell 21a is adjusted, the processing proceeds to the following step S4.

In step S4, the mode switching unit 24c determines whether the operation mode 2M is the first operation mode 2M1. In a case where the operation mode 2M is the first operation mode 2M1 (Yes in step S4), the processing proceeds to the following step S5. In a case where the operation mode 2M is not the first operation mode 2M1, that is, a case where the operation mode 2M is the second operation mode 2M2 (No in step S4), the processing proceeds to step S8 (via the connector A) (see Fig. 3B).

In step S5, the mode switching unit 24c determines whether the target power TP after adjustment is less than a first target power threshold Th1 (see Fig. 4) included in a target power threshold Th to be described later. In the present embodiment, the first target power threshold Th1 is set in advance and stored in the storage unit 24b. Note that the target power threshold Th includes a second target power threshold Th2 (see Fig. 4) to be described later, in addition to the first target power threshold Th1. In the present embodiment, the first target power threshold Th1 and the second target power threshold Th2 are different (different values), but may be the same (the same value). In a case where the target power TP after adjustment is less than the first target power threshold Th1 (Yes in step S5), the processing proceeds to the following step S6. In a case where the target power TP after adjustment is not less than the first target power threshold Th1, that is, a case where the target power TP after adjustment is equal to or higher than the first target power threshold Th1 (No in step S5), the processing proceeds to step S7.

In step S6, the mode switching unit 24c switches the operation mode 2M from the first operation mode 2M1 to the second operation mode 2M2. When the operation mode 2M is switched from the first operation mode 2M1 to the second operation mode 2M2, the processing returns to step S1.

In step S7, the power instruction unit 24d (see Fig. 2) instructs the fuel cell control unit 21d (see Fig. 2) to cause the fuel cell 21a to generate power with the target power TP after adjustment. Based on this instruction, the fuel cell control unit 21d controls the fuel cell 21a such that the power output from the fuel cell 21a becomes the target power TP after adjustment. As described above, the target power TP after adjustment is calculated based on the demand power of the load 102. Therefore, the fuel cell 21a outputs power so as to follow the demand power of the load 102 in the first operation mode 2M1. That is, a control method for the fuel cell system 2 of the present embodiment includes causing the power output from the fuel cell 21a to follow the demand power of the load 102 in the first operation mode 2M1.

In some cases, the fuel cell 21a generates power more efficiently by generating power with power smaller than the rated power (also referred to as rated output) (by partial load operation) than by generating power with the rated power (by full load operation). Therefore, from the viewpoint of improving the power generation efficiency of the fuel cell system 2 by causing the fuel cell 21a to generate the power with the power smaller than the rated power, the following configuration is desirable. That is, as in the present embodiment, it is desirable that the control method for the fuel cell system 2 include causing the power output from the fuel cell 21a to follow the demand power of the load 102 in first operation mode 2M1.

As illustrated in Fig. 3B, in step S8, the mode switching unit 24c determines whether the target power TP before adjustment of the fuel cell 21a is equal to or higher than the second target power threshold Th2 and the state of charge S of the battery 22 is less than or equal to an upper limit threshold. The upper limit threshold is set in advance and stored in the storage unit 24b. The upper limit threshold is, for example, 80%. In a case where the target power TP before adjustment is equal to or higher than the second target power threshold Th2 and the state of charge S of the battery 22 is less than or equal to the upper limit threshold (Yes in step S8), the processing proceeds to step S16. In a case where at least one of the fact that the target power TP before adjustment is not equal to or higher than the second target power threshold Th2 and the fact that the state of charge S of the battery 22 is not less than or equal to the upper limit threshold is satisfied (No in step S8), the processing proceeds to step S9.

In step S9, the mode switching unit 24c determines whether the fuel cell system 2 is in the discharge mode 2M2A. In a case where the fuel cell system 2 is in the discharge mode 2M2A (Yes in step S9), the processing proceeds to the following step S10. In a case where the fuel cell system 2 is not in the discharge mode 2M2A, that is, a case where the fuel cell system 2 is in the charge mode 2M2B (No in step S9), the processing proceeds to step S13.

In step S10, the mode switching unit 24c determines whether any of the fact that the state of charge S of the battery 22 is less than or equal to a lower limit threshold, the fact that the battery 22 is in the end stage of discharge, and the fact that the link voltage is less than or equal to a link voltage threshold, is satisfied. In the present embodiment, each of the lower limit threshold and the link voltage threshold is set in advance and stored in the storage unit 24b. The lower limit threshold is, for example, 40%. In addition, the end stage of discharge (also simply referred to as the end of discharge) of the battery 22 is realized when the voltage of the battery 22 (voltage of the power stored in the battery 22) becomes less than or equal to a predetermined lower limit voltage. Whether the battery 22 is in the end stage of discharge is determined by the battery control unit 22a (see Fig. 2). This determination result is transmitted to the control device 24 via CAN communication.

In a case where any of the fact that the state of charge S of the battery 22 is less than or equal to the lower limit threshold, the fact that the battery 22 is in the end stage of discharge, and the fact that the link voltage is less than or equal to the link voltage threshold is satisfied (Yes in step S10), the processing proceeds to the following step S11. In a case where none of the fact that the state of charge S of the battery 22 is less than or equal to the lower limit threshold, the fact that the battery 22 is in the end stage of discharge, and the fact that the link voltage is less than or equal to the link voltage threshold is satisfied (No in step S10), the processing proceeds to step S12.

In step S11, the mode switching unit 24c switches the fuel cell system 2 from the discharge mode 2M2A to the charge mode 2M2B. When the discharge mode 2M2A is switched to the charge mode 2M2B, the processing returns to step S8.

In step S12, the power instruction unit 24d instructs the fuel cell control unit 21d to cause the fuel cell 21a to stop power generation. Based on this instruction, the fuel cell control unit 21d controls the fuel cell 21a to stop the power generation by the fuel cell 21a. As a result, power is not output from the fuel cell 21a. When the stop of power generation by the fuel cell 21a is instructed, the processing returns to step S8.

In step S13, the mode switching unit 24c determines whether any of the fact that the state of charge S of the battery 22 is equal to or higher than the upper limit threshold and the fact that the battery 22 is in the end stage of charge, is satisfied. In the present embodiment, the end stage of charge (also simply referred to as the end of charge) of the battery 22 is realized when the voltage of the battery 22 (voltage of the power stored in the battery 22) becomes equal to or higher than a predetermined upper limit voltage. Similarly to the determination of the end stage of discharge of the battery 22, whether the battery 22 is in the end stage of charge is determined by the battery control unit 22a.

In a case where any of the fact that the state of charge S of the battery 22 is equal to or higher than the upper limit threshold and the fact that the battery 22 is in the end stage of charge is satisfied (Yes in step S13), the processing proceeds to the following step S14. In a case where none of the fact that the state of charge S of the battery 22 is equal to or higher than the upper limit threshold and the fact that the battery 22 is in the end stage of charge is satisfied (No in step S13), the processing proceeds to step S15.

In step S14, the mode switching unit 24c switches the fuel cell system 2 from the charge mode 2M2B to the discharge mode 2M2A. That is, the control method for the fuel cell system 2 of the present embodiment includes switching between the discharge mode 2M2A and the charge mode 2M2B based on the state of the battery 22. Specifically, the state of the battery 22 includes the state of charge S of the battery 22. In addition, as described above, the end stage of discharge and the end stage of charge of the battery 22 are determined by the voltage of the battery 22, and the link voltage is the same as the voltage of the battery 22. Therefore, the state of the battery 22 includes the voltage of the battery 22 in addition to the state of charge S of the battery 22 (see step S10 and step S13). When the charge mode 2M2B is switched to the discharge mode 2M2A, the processing returns to step S8.

From the viewpoint of switching between the discharge mode 2M2A and the charge mode 2M2B while maintaining the state of the battery 22 well, the following configuration is desirable. That is, as in the present embodiment, it is desirable that the control method for the fuel cell system 2 include switching between the discharge mode 2M2A and the charge mode 2M2B based on the state of the battery 22.

When the battery 22 enters an overcharge state in which the state of charge S of the battery 22 is equal to or higher than the upper limit threshold or an overdischarge state in which the state of charge S of the battery 22 is less than or equal to the lower limit threshold, the deterioration of the battery 22 progresses. Therefore, as in the present embodiment, from the viewpoint of suppressing the progress of deterioration of the battery 22, it is desirable that the state of the battery 22 include the state of charge S of the battery 22.

As described above, the state of charge S of the battery 22 is calculated by the battery control unit 22a based on the information (for example, the voltage, current, temperature, and the like of the battery 22) acquired via the various sensors provided in the battery 22. That is, the state of charge S of the battery 22 is an estimated value. Meanwhile, the voltage of the battery 22 is acquired by a voltage sensor included in the various sensors described above. Therefore, the voltage of the battery 22 often has a smaller deviation from the actual value than that of the state of charge S of the battery 22. Accordingly, as in the present embodiment, from the viewpoint of reliably preventing the battery 22 from becoming in the overcharged state or the overdischarged state, it is desirable that the state of the battery 22 include the voltage of the battery 22.

In step S15, the power instruction unit 24d instructs the fuel cell control unit 21d to cause the fuel cell 21a to generate power with predetermined power PW. Based on this instruction, the fuel cell control unit 21d controls the fuel cell 21a such that the power output from the fuel cell 21a becomes the predetermined power PW. In the present embodiment, the predetermined power PW is set in advance and stored in the storage unit 24b. That is, the control method for the fuel cell system 2 of the present embodiment includes causing the fuel cell 21a to output (generate) the predetermined power PW in the charge mode 2M2B. In this case, the power (predetermined power PW) generated by the fuel cell 21a is boosted by the boost converter 21b and supplied to the battery 22 and the inverter 23. As a result, the fuel cell system 2 can extract the power to the outside while charging the battery 22.

In step S16, the mode switching unit 24c switches the operation mode 2M from the second operation mode 2M2 to the first operation mode 2M1. That is, the control method for the fuel cell system 2 of the present embodiment includes switching between the first operation mode 2M1 and the second operation mode 2M2 based on the target power TP of the fuel cell 21a (the target power TP before adjustment and the target power TP after adjustment in the present embodiment). In addition, the fuel cell system 2 includes the mode switching unit 24c that switches between the first operation mode 2M1 and the second operation mode 2M2 based on the target power TP of the fuel cell 21a (the target power TP before adjustment and the target power TP after adjustment in the present embodiment).

According to the configuration described above, for example, in a case where the target power TP of the fuel cell 21a (the target power TP before adjustment in the present embodiment) is larger than a low power range in which the deterioration of the fuel cell 21a easily progresses, the fuel cell system 2 can be switched to the first operation mode 2M1. The fuel cell 21a in the first operation mode 2M1 generates power with the target power TP (the target power TP after adjustment in the present embodiment) so that the fuel cell 21a can be prevented from generating power in the low power range in which the deterioration of the fuel cell 21a easily progresses. On the other hand, in a case where the target power TP of the fuel cell 21a (the target power TP after adjustment in the present embodiment) is within the low power range in which the deterioration of the fuel cell 21a easily progresses, the fuel cell system 2 can be switched to the second operation mode 2M2. The second operation mode 2M2 includes the discharge mode 2M2A in which the power output from the battery 22 is extracted to the outside of the fuel cell system 2 (monogeneration device 1). Therefore, by setting to the discharge mode 2M2A in the second operation mode 2M2, power generation by the fuel cell 21a becomes unnecessary, and the fuel cell 21a can be prevented from generating power in the low power range in which deterioration of the fuel cell 21a easily progresses. In addition, an output range of the fuel cell system 2 can be expanded as compared with the configuration in which the second operation mode 2M2 is excluded. As described above, the output range of fuel cell system 2 can be expanded while the deterioration of the fuel cell 21a is suppressed.

From the viewpoint of reliably covering the demand power of the load 102 with the power output from the fuel cell system 2 while suppressing the deterioration of the fuel cell 21a, the following configuration is desirable. That is, as in the present embodiment, it is desirable that the target power TP of the fuel cell 21a (the target power TP before adjustment and the target power TP after adjustment in the present embodiment) be calculated based on the demand power of the load 102 electrically connected to the fuel cell system 2.

It is desirable to prevent the battery 22 from becoming unable to output power in the discharge mode 2M2A due to the shortage of the state of charge S of the battery 22. In addition, even when the battery 22 is being charged, it is desirable that the fuel cell system 2 extract the power to the outside. From such a viewpoint, as in the present embodiment, it is desirable that the second operation mode 2M2 include the charge mode 2M2B in which the power output from the fuel cell 21a is extracted to the outside while being stored in the battery 22.

In the charge mode 2M2B, unlike the discharge mode 2M2A, the fuel cell 21a generates power. However, for example, when the fuel cell 21a generates power with the predetermined power PW larger than the low power range in which the deterioration of the fuel cell 21a easily progresses, the progress of the deterioration of the fuel cell 21a is prevented. Therefore, also in the charge mode 2M2B, from the viewpoint of suppressing the deterioration of the fuel cell 21a, the following configuration is desirable. That is, as in the present embodiment, it is desirable that the control method for the fuel cell system 2 include causing the fuel cell 21a to output the predetermined power PW in the charge mode 2M2B.

When the operation mode 2M is switched from the second operation mode 2M2 to the first operation mode 2M1, the processing returns to step S1 (via the connector B).

As indicated in step S5 and step S6 (see Fig. 3A), the condition related to the target power TP of the fuel cell 21a for switching the operation mode 2M from the first operation mode 2M1 to the second operation mode 2M2 is as follows. That is, in the case of the first operation mode 2M1, the target power TP after adjustment becomes less than the first target power threshold Th1 of the target power threshold Th. On the other hand, as indicated in step S8 and step S16, the condition related to the target power TP of the fuel cell 21a for switching the operation mode 2M from the second operation mode 2M2 to the first operation mode 2M1 is as follows. That is, in the case of the second operation mode 2M2, the target power TP before adjustment becomes equal to or higher than the second target power threshold Th2 of the target power threshold Th. In other words, the target power threshold Th serves as a criterion for determining whether to switch between the first operation mode 2M1 and the second operation mode 2M2. More specifically, it is as follows. Fig. 4 is an explanatory diagram for describing the switching of the operation mode 2M based on the target power TP.

For example, in the case where the operation mode 2M is the first operation mode 2M1, the target power TP (the target power TP after adjustment in the present embodiment) decreases, and when the target power TP becomes less than the first target power threshold Th1, the operation mode 2M is switched to the second operation mode 2M2 (see point P1 in Fig. 4). On the other hand, in the case where the operation mode 2M is the second operation mode 2M2, the target power TP (the target power TP before adjustment in the present embodiment) increases, and when the target power TP becomes equal to or higher than the second target power threshold Th2, the operation mode 2M is switched to the first operation mode 2M1 (see point P2 in Fig. 4). That is, the target power threshold Th serving as a determination criterion for switching the operation mode 2M becomes the first target power threshold Th1 in the case where the operation mode 2M is the first operation mode 2M1, and becomes the second target power threshold Th2 in the case where the operation mode 2M is the second operation mode 2M2. In other words, the target power threshold Th has hysteresis.

From the viewpoint of preventing the switching between the first operation mode 2M1 and the second operation mode 2M2 from being frequently performed in a short time (also referred to as hunting) and improving the stability of the control in the fuel cell system 2, the following configuration is desirable. That is, as in the present embodiment, it is desirable that the target power threshold Th serving as a criterion for determining whether to switch between the first operation mode 2M1 and the second operation mode 2M2 have hysteresis.

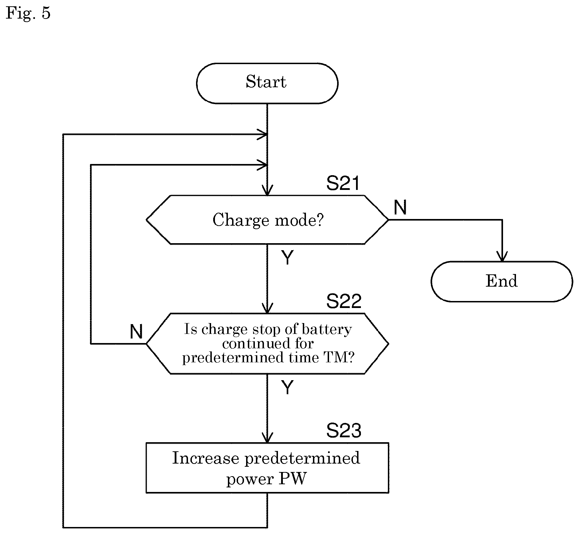

As indicated in step S15 (see Fig. 3B), in the charge mode 2M2B, the battery 22 is charged by (a part of) the power output from the fuel cell 21a. However, when (a part of) the power output from the fuel cell 21a is insufficient (not enough) for charging the battery 22, there is a case where the charging of the battery 22 may not proceed, that is, the state of charge S of the battery 22 may not increase. Hereinafter, a power generation instruction to the fuel cell 21a in this case will be described. Fig. 5 is a flowchart indicating a flow of changing the power generation instruction to the fuel cell 21a in a case where charging of the battery 22 is stopped in the charge mode 2M2B.

In step S21, the power instruction unit 24d (see Fig. 2) determines whether the fuel cell system 2 is in the charge mode 2M2B. In a case where the fuel cell system 2 is in the charge mode 2M2B (Yes in step S21), the processing proceeds to the following step S21. In a case where the fuel cell system 2 is not in the charge mode 2M2B (No in step S21), this flowchart ends.

In step S22, the power instruction unit 24d determines whether the stop of charging of the battery 22 has been continued for a predetermined time TM. In the present embodiment, the determination as to whether the charging of the battery 22 is stopped is realized by comparing the state of charge S of the battery 22 at that time with the state of charge S of the battery 22 immediately before that time. Specifically, if the state of charge S of the battery 22 at that time is the same as the state of charge S of the battery 22 immediately before that time or smaller than the state of charge S of the battery 22 immediately before that time, the power instruction unit 24d determines that the charging of the battery 22 is stopped. In addition, if the state of charge S of the battery 22 at that time is larger than the state of charge S of the battery 22 immediately before that time, the power instruction unit 24d determines that the charging of the battery 22 is in progress (not stopped). Note that the predetermined time TM is set in advance and stored in the storage unit 24b (see Fig. 2). The predetermined time TM is set to, for example, five minutes. However, the setting of the predetermined time TM is not limited to 5 minutes, and may be, for example, 1 minute or 10 minutes.

In a case where the stop of charging of the battery 22 has been continued for the predetermined time TM (Yes in step S22), the processing proceeds to the following step S23. In a case where the stop of charging of the battery 22 has not been continued for the predetermined time TM (No in step S22), the processing returns to step S21.

In step S23, the power instruction unit 24d increases the predetermined power PW instructed to the fuel cell 21a in the charge mode 2M2B by predetermined correction power (for example, 500 W). That is, the control method for the fuel cell system 2 of the present embodiment includes increasing the predetermined power PW in a case where the stop of charging of the battery 22 continues for the predetermined time TM in the charge mode 2M2B. The predetermined correction power is not limited to 500 W, and may be, for example, 100 W or 1000 W. As a result, an instruction to cause the fuel cell control unit 21d to generate the fuel cell 21a with the predetermined power PW increased by the predetermined correction power is output. Therefore, the fuel cell control unit 21d controls the fuel cell 21a such that the power output from the fuel cell 21a becomes the predetermined power PW increased by the predetermined correction power.

When the predetermined power PW increases, the processing returns to step S21. Note that when the predetermined power PW increases, the continuation time of the charge stop of the battery 22 is reset (returned to zero). Therefore, in a case where the charge mode 2M2B continues, the processing of step S23 is repeated every predetermined time TM until the charging of the battery 22 proceeds. That is, the predetermined power PW is repeatedly increased, and the power output from the fuel cell 21a gradually increases.

In the charge mode 2M2B, when the power (predetermined power PW) output from the fuel cell 21a increases, the power supplied from the fuel cell 21a to the battery 22 increases. When the power supplied to the battery 22 increases, charging of the battery 22 is promoted. Therefore, from the viewpoint of reliably charging the battery 22, the following configuration is desirable. That is, as in the present embodiment, it is desirable that the control method for the fuel cell system 2 include increasing the predetermined power PW output from the fuel cell 21a in a case where the stop of charging of the battery 22 continues for a predetermined time in the charge mode 2M2B.

### [4. Supplement]

In the present embodiment, the example in which the monogeneration device 1 simply having a power generation function includes the fuel cell system 2 has been described, but the fuel cell system 2 may be applied to devices other than the monogeneration device 1. For example, the fuel cell system 2 may be applied to a cogeneration device that generates power and recovers waste heat generated by the power generation to be able to be used for, for example, hot water supply, room heating, and the like. Since the fuel cell 21a included in the fuel cell system 2 generates heat during power generation, the fuel cell system 2 is suitable for the cogeneration device.

In the present embodiment, the configuration in which, in a case where the state of charge S of the battery 22 is smaller than the target state of charge of the battery 22, the value obtained by adding the first adjustment value described above to the target power TP before adjustment is set as the target power TP after adjustment (see step S3 in Fig. 3A), has been described. As a result, the charging of the battery 22 progresses (the state of charge S of the battery 22 increases), but even in this case, the charging of the battery 22 may stop. Even in this state, in order to reliably progress the charging of the battery 22, the first adjustment value may be increased in a case where the stop of charging of the battery 22 continues for a predetermined time.

In the present embodiment, the configuration in which, in a case where the state of charge S of the battery 22 is larger than the target state of charge of the battery 22, the value obtained by subtracting the second adjustment value described above from the target power TP before adjustment is set as the target power TP after adjustment (see step S3 in Fig. 3A), has been described. As a result, the charging of the battery 22 is stopped, but even in this case, the charging of the battery 22 may progress. Even in this state, in order to reliably stop the charging of the battery 22 and to prevent the battery 22 from becoming in the overcharged state, the second adjustment value may be decreased in a case where the progress of the charging of the battery 22 continues for a predetermined time.

### [5. Supplementary note]

The control method of the fuel cell system 2, the control program 24b 1, the fuel cell system 2, and the monogeneration device 1 described in the present embodiment can also be expressed as a control method of a fuel cell system, a control program, a fuel cell system, and a monogeneration device described in the following supplementary notes.

A control method for a fuel cell system according to supplementary note (1) is a control method for a fuel cell system including
a fuel cell, and
a battery that stores power output from the fuel cell, and having
a first operation mode in which power output from the fuel cell is extracted to an outside, and
a second operation mode including a discharge mode in which power output from the battery is extracted to an outside, and the control method includes
switching between the first operation mode and the second operation mode based on target power of the fuel cell.

A control method for a fuel cell system according to supplementary note (2) is the control method according to supplementary note (1), in which
the target power of the fuel cell is calculated based on demand power of a load electrically connected to the fuel cell system.

A control method for a fuel cell system according to supplementary note (3) is the control method according to supplementary note (2), further including
causing power output from the fuel cell to follow the demand power of the load in the first operation mode.

A control method for a fuel cell system according to supplementary note (4) is the control method according to any one of supplementary notes (1) to (3), in which
a target power threshold serving as a criterion for determining whether to switch between the first operation mode and the second operation mode has hysteresis.

A control method for a fuel cell system according to supplementary note (5) is the control method according to any one of supplementary notes (1) to (4), in which
the second operation mode includes a charge mode in which power output from the fuel cell is extracted to an outside while being stored in the battery.

A control method for a fuel cell system according to supplementary note (6) is the control method according to supplementary note (5), further including
switching between the discharge mode and the charge mode based on a state of the battery.

A control method for a fuel cell system according to supplementary note (7) is the control method according to supplementary note (6), in which
the state of the battery includes a state of charge of the battery.

A control method for a fuel cell system according to supplementary note (8) is the control method according to supplementary note (6) or (7), in which
the state of the battery includes a voltage of the battery.

A control method for a fuel cell system according to supplementary note (9) is the control method according to any one of supplementary notes (5) to (8), further including
causing the fuel cell to output a predetermined power in the charge mode.

A control method for a fuel cell system according to supplementary note (10) is the control method according to supplementary note (9), further including
increasing the predetermined power in a case where stop of charging of the battery continues for a predetermined time in the charge mode.

A control program for a fuel cell system according to supplementary note (11) causes at least one arithmetic device to execute the control method according to any one of supplementary notes (1) to (10).

A fuel cell system according to supplementary note (12) is a fuel cell system including:
a fuel cell; and
a battery that stores power output from the fuel cell, and having
a first operation mode in which power output from the fuel cell is extracted to an outside, and
a second operation mode including a discharge mode in which power output from the battery is extracted to an outside, in which the fuel cell system further includes
a mode switching unit that switches between the first operation mode and the second operation mode based on target power of the fuel cell.

A monogeneration device of supplementary note (13) includes the fuel cell system according to supplementary note (12).

Although the embodiment of the present invention has been described above, the scope of the present invention is not limited to this, and may be expanded or modified without departing from the gist of the invention.

The present invention is applicable to, for example, a monogeneration device for industrial use, home use, and the like.

### LIST OF REFERENCE SIGNS

- 1: Monogeneration device
- 2: Fuel cell system
- 2M1: First operation mode
- 2M2: Second operation mode
- 2M2A: Discharge mode
- 2M2B: Charge mode
- 21a: Fuel cell
- 22: Battery
- 24c: Mode switching unit
- 102: Load
- PW: Predetermined power
- S: State of charge
- TM: Predetermined time
- TP: Target power
- Th: Target power threshold

## Claims

1. A control method for a fuel cell system including
a fuel cell, and
a battery that stores power output from the fuel cell, and having
a first operation mode in which power output from the fuel cell is extracted to an outside, and
a second operation mode including a discharge mode in which power output from the battery is extracted to an outside, the control method comprising
switching between the first operation mode and the second operation mode based on target power of the fuel cell.

2. The control method for a fuel cell system according to claim 1, wherein the target power of the fuel cell is calculated based on demand power of a load electrically connected to the fuel cell system.

3. The control method for a fuel cell system according to claim 2, further comprising causing power output from the fuel cell to follow the demand power of the load in the first operation mode.

4. The control method for a fuel cell system according to claim 1, wherein a target power threshold serving as a criterion for determining whether to switch between the first operation mode and the second operation mode has hysteresis.

5. The control method for a fuel cell system according to claim 1, wherein the second operation mode includes a charge mode in which power output from the fuel cell is extracted to an outside while being stored in the battery.

6. The control method for a fuel cell system according to claim 5, further comprising switching between the discharge mode and the charge mode based on a state of the battery.

7. The control method for a fuel cell system according to claim 6, wherein the state of the battery includes a state of charge of the battery.

8. The control method for a fuel cell system according to claim 6, wherein the state of the battery includes a voltage of the battery.

9. The control method for a fuel cell system according to claim 5, further comprising causing the fuel cell to output a predetermined power in the charge mode.

10. The control method for a fuel cell system according to claim 9, further comprising increasing the predetermined power in a case where stop of charging of the battery continues for a predetermined time in the charge mode.

11. A control program for a fuel cell system, causing at least one arithmetic device to execute the control method according to any one of claims 1 to 10.

12. A fuel cell system comprising:
a fuel cell; and
a battery that stores power output from the fuel cell, and having a first operation mode in which power output from the fuel cell is extracted to an outside, and
a second operation mode including a discharge mode in which power output from the battery is extracted to an outside, wherein the fuel cell system further comprises
a mode switching unit that switches between the first operation mode and the second operation mode based on target power of the fuel cell.

13. A monogeneration device comprising the fuel cell system according to claim 12.
